# EUROPÄISCHE PATENTSCHRIFT

(11) **EP 0 806 322 B1**
(45) Veröffentlichungstag und Bekanntmachung des Hinweises auf die Patenterteilung: **25.02.2004**
(21) Anmeldenummer: 97107162.6
(22) Anmeldetag: 30.04.1997
(51) Int. Cl.: B60R 19/38, B60R 19/24

(54) **Stossfänger**
Bumper
Pare-chocs

(30) Priorität: 07.05.1996 DE 29608248 U
(43) Veröffentlichungstag der Anmeldung: 12.11.1997
(73) Patentinhaber: AUDI AG, 85045 Ingolstadt (DE)
(72) Erfinder: Mies, Karl-Heinz, 85077 Manching (DE); Ott, Jürgen, 93333 Hienheim (DE); Grab, Rainer, 85055 Ingolstadt (DE); Henneke, Otto, 32791 Lage (DE); Matecki, Manfred, 32689 Bavenhausen (DE); Obst, Volker, Dr., 32105 Bad Salzuflen (DE)
(74) Vertreter: Engelhardt, Harald

(56) Entgegenhaltungen:
- EP-A- 0 155 764
- EP-A- 0 190 713
- DE-A- 2 903 542
- DE-C- 4 333 695

## Beschreibung

Die vorliegende Erfindung betrifft einen Stoßfänger gemäß dem Oberbegriff des Anspruches 1.

Fertigungsbedingt ergeben sich bei der Montage von Stoßfängern Probleme beim Ausgleich von Toleranzen. Durch einen solchen Ausgleich soll der optische Gesamteindruck optimiert werden. Das heißt, die Spaltbreiten zwischen der Karosserie und dem verkleideten Stoßfänger sollen über die gesamte Spaltlänge gleich groß gehalten werden.

Es kommen Verstelleinrichtungen zum Einsatz, mit denen eine Dreiachsenverstellung des Stoßfänger in Längs-, Quer- und Vertikalrichtung möglich ist.

Die bekannten Verstelleinrichtungen bieten jedoch keine Möglichkeit, den Stoßfänger um seine Querachse zu drehen, ohne auf die Befestigungselemente wirkende Querkräfte zu erzeugen. Vielmehr tritt hierbei eine einseitige Belastung der Verstelleinrichtung auf, die nicht wünschenswert ist und die volle Funktionsfähigkeit des Stoßfängers beeinträchtigt.

Die gattungsbildende DE 43 33 695 C1 offenbart eine an einem Holm befestigte Verstelleinrichtung für einen Stossfänger, wobei die Verstelleinrichtung eine Hülse aufweist, die am Holm über ein Gewinde befestigt ist. Ferner weisen derartige Verstelleinrichtungen Stellringe auf, die solange beweglich in der Hülse gelagert sind bis sie mit einem Träger verspannt werden, der die Hülse umgibt

Nachteilig hierbei ist jedoch, dass die Stellringe nur den oberen Bereich des Trägers justieren können, der untere Teil des Trägers wird nur fixiert.

Der vorliegenden Erfindung liegt daher die Aufgabe zugrunde, einen Stoßfänger der gattungsgemäßen Art so zu gestalten, daß er sowohl auf der Oberseite als auch auf der Unterseite des Trägers justiert werden kann, wodurch zusätzlich Querschnittstoleranzen des Trägers ausgeglichen werden können.

Diese Aufgabe wird durch einen Stoßfänger gelöst, der die Merkmale des Anspruches 1 aufweist.

Eine Verschwenkung des Stoßfängers um die Querachse kann nunmehr auch erfolgen, ohne daß auf die lastaufnehmenden Teile Querkräfte einwirken.

Dies wird dadurch erreicht, daß praktisch in jeder Stellung des Trägers die eingeschraubten Gewindebuchsen der Stellringe auf der gesamten zugeordneten Stirnfläche der Hülse vollflächig an den Innenseiten der Schenkel des U-förmigen Trägers pressend aufliegen.

Nach einer vorteilhaften Ausgestaltung der Erfindung ist vorgesehen, daß jeder Steilring einen umlaufenden Kragen aufweist, der auf der Stirnfläche der Hülse aufliegt wobei dieser Kragen auf der der Hülse zugewandten Seite umlaufend eine kalottenartige Wölbung aufweist. Zweckmäßigerweise ist die Stirnseite der Hülse dieser Wölbung angepaßt.

Zum einfachen Verspannen des Trägers und dessen Toleranzausgleich weisen die beiden Gewindebuchsen gegenläufiges Gewinde auf, die über einen gemeinsamen Schraubbolzen drehbar sind. In Endstellung der Gewindebuchsen liegen diese vollflächig am Träger an.

Hierdurch kann der Träger in jeder Position so festgesetzt werden, daß die Spaltbreiten überall gleich groß sind.

Zudem wird erreicht, daß bei einem Anziehen des Schraubbolzens mit einem vorgegebenen Drehmoment die Gewindebuchsen stets vollflächig verspannt werden, so daß Setzeffekte durch lokale hohe Flächenpressungen vermieden werden.

Weitere vorteilhafte Ausgestaltungen der Erfindung sind in den Unteransprüchen gekennzeichnet.

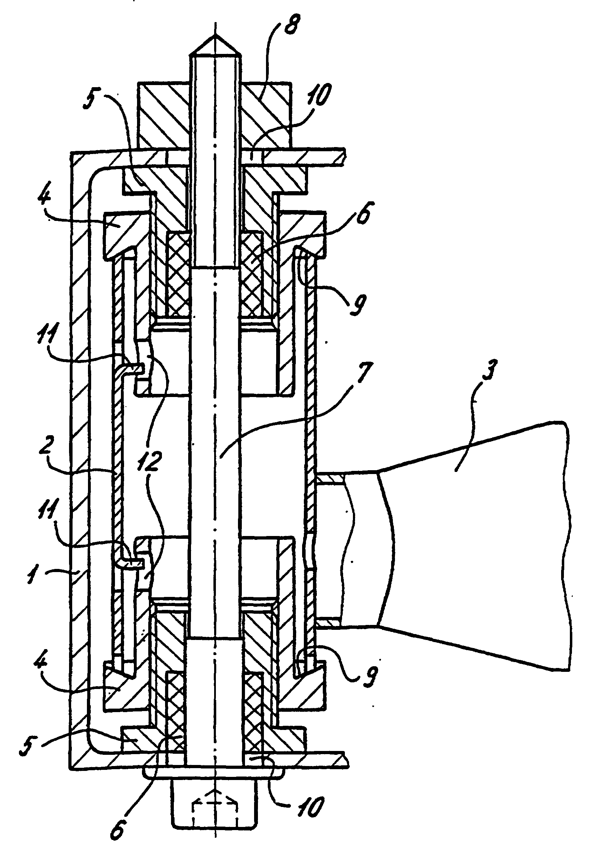

Ein Ausführungsbeispiel der Erfindung wird nachfolgend anhand der beigefügten Zeichnung beschrieben.

Die einzige Figur zeigt einen Teil des erfindungsgemäßen Stoßfängers im Querschnitt.

In der Figur ist ein Teil eines Stoßfängers für ein Kraftfahrzeug gezeigt, das im wesentlichen aus einem Träger 1, einem fest mit tragenden Teilen des Kraftfahrzeuges verbundenen Holm 3 sowie einer Hülse 2 besteht, die an dem Holm 3, beispielsweise durch Verschweißen befestigt ist.

In den beiden Endbereichen der Hülse 2 sind jeweils ein Stellring 4 verdrehsicher angeordnet, wozu die Hülse 2 nach innen gerichtete Zungen 11 aufweist, die in Öffnungen 12 der Stellringe 4 hineinragen.

Die Öffnungen 12 sind dabei so groß gehalten, daß eine gewisse freie Bewegung der Stellringe 4 in axialer sowie in Kipprichtung zur Hülse 2 möglich ist.

Insbesondere um ein Verschwenken des Stellringes innerhalb eines Winkelbereichs zu ermöglichen, ist der Außendurchmesser des Stellringes 4 entsprechend geringer als der lichte Durchmesser der Hülse 2.

Jeder der beiden Stellringe 4 ist mit einem Innengewinde versehen, in das eine Gewindebuchse 5 eingeschraubt ist. Die Gewinde der sich gegenüberliegenden Stellringe 4 bzw. des zugeordneten Gewindebuchsen 5 sind gegenläufig ausgebildet.

Weiter sind in den Gewindebuchsen 5 jeweils ein Mitnehmerring 6 verdrehsicher festgelegt, die gegenüber dem Schraubbolzen einen bestimmten Reibungskoeffizienten aufweisen.

Diese Mitnehmerringe 6 umschließen einen Schraubbolzen 7, der sich durch beide Gewindebuchsen 5 erstreckt und einerseits an der Außenseite eines Schenkels des U-förmigen Trägers 1 aufliegt und andererseits in ein Mutterteil 8 eingedreht ist, das an der Außenseite des anderen Schenkels verdrehsicher, jedoch verschiebbar befestigt ist.

Jeder Schenkel ist mit einer Bohrung 10 versehen, durch die der Schraubbolzen 7 geführt ist und deren Durchmesser so groß gegenüber dem Durchmesser des Schraubbolzens 7 gehalten ist, daß eine relative Verschiebung des Trägers 1 zu den Gewindebuchsen 5 sowohl in Längs- als auch in Querrichtung möglich ist.

Jeder Stellring 4 weist einen Kragen 9 auf, der vorzugsweise auf seiner der Hülse 2 zugewandten Seite konkav gewölbt ist und mit dieser Seite auf der zugeordneten, der Wölbung angepaßten Stirnseite der Hülse 2 aufliegt. Unter ständiger vollständiger Anlage des Kragens 9 an der Stirnseite der Hülse 2 kann der Stellring 4 und damit verbunden der Träger 1 über einen gewissen Winkelbereich gegenüber der Hülse 2 verschwenkt werden.

In der Figur ist die Position gezeigt, in der die Gewindebuchsen 5 und damit die Stellringe 4 fest mit dem Träger 1 verspannt sind.

In einer Nichtgebrauchsstellung sind die Gewindebuchsen 5 so weit zu den Stellringen 4 zurückgeschraubt, daß der Träger 1 frei aufschiebbar ist.

Durch Drehen des Schraubbolzens 7 wird sodann die obere Gewindebuchse 5 aus dem Stellring 4 herausgedreht, wobei das aufzubringende Drehmoment durch den Mitnehmerring 6 übertragen wird, der reibschlüssig an dem Schraubbolzen 7 anliegt.

Erst wenn die obere Gewindebuchse 5 an der Innenseite des Schenkels des fixierten Trägers 1 anliegt, wird der Reibschluß zwischen dem Schraubbolzen 7 und dem oberen Mitnehmerring 6 überwunden, so daß bei einem weiteren Drehen des Schraubbolzens 7 die untere Gewindebuchse 5 über den Mitnehmerring 6 gegen die zugeordnete Innenseite des Trägers 1 gedruckt wird. Durch weiteres Anziehen mit einem festgelegten Drehmoment wird die Hülse 2 mit dem Träger 1 verspannt.

Die erfindungsgemäße Konstruktion erlaubt somit neben der Trägereinstellung in allen Richtungen auch einen Ausgleich von Querschnittstoleranzen des Trägers 1.

## Patentansprüche

1. Stoßfänger mit Verstelleinrichtungen (4, 5) für ein Kraftfahrzeug,
- wobei die Verstelleinrichtungen (4, 5) jeweils an einem an tragenden Teilen des Kraftfahrzeuges feststellbaren Holm (3) befestigt sind,
- wobei an den Verstelleinrichtungen (4, 5) lageveränderbar ein Träger (1) angeschlossen ist, und
- wobei zur Festlegung des Trägers (1) an jedem Holm (3) eine quer zur Längsachse des Trägers angeordnete Hülse (2) befestigt ist und in den sich gegenüber liegenden Endbereichen jeder Hülse (2) jeweils ein Stellring (4) angeordnet ist,
- wobei die Stellringe (4) gegenüber der Hülse (2) um einen Winkelbereich kippbar gehalten sind und
- wobei die Stellringe (4) mit dem Träger (1) verspannt bar sind,
**dadurch gekennzeichnet, dass** die Stellringe (4) gegenüber der Hülse verdrehsicher gehalten sind, daß in den beiden sich gegenüberliegenden Stellringen (4) jeweils eine Gewindebuchse (5) eingeschraubt ist, und daß die Stellringe (4) zusammen mit den Gewindebuchsen (5) die Verstelleinrichtungen (4, 5) bilden.

2. Stoßfänger nach Anspruch 1, **dadurch gekennzeichnet, daß** der Stellring (4) einen umlaufenden Kragen (9) aufweist, der mit seiner Unterseite an der zugeordneten Stirnseite der Hülse (2) anliegt, wobei die Unterseite konkav gewölbt und die Stirnseite der Hülse (2) entsprechend angepaßt ist.

3. Stoßfänger nach Anspruch 1, **dadurch gekennzeichnet, daß** die Gewinde der sich gegenüberliegenden Stellringe (4) bzw. der Gewindebuchsen (5) gegenläufig ausgebildet sind.

4. Stoßfänger nach Anspruch 3, **dadurch gekennzeichnet, daß** in jeder Gewindebuchse (5) ein Mitnehmerring (6) verdrehsicher festgelegt ist, der reibschlüssig an einem Schraubbolzen (7) anliegt.

5. Stoßfänger nach Anspruch 4, **dadurch gekennzeichnet, daß** der Schraubbolzen (7) einerseits an der Außenseite des Trägers (1) anliegt und andererseits in ein Mutternteil (8) eingeschraubt ist, das verdrehsicher auf der gegenüberliegen Außenseite des Trägers (1) angeordnet ist.

6. Stoßfänger nach Anspruch 5, **dadurch gekennzeichnet, daß** das Mutternteil (8) auf der entsprechenden Außenfläche des Trägers (1) hin und her verschiebbar ist.

7. Stoßfänger nach Anspruch 4, **dadurch gekennzeichnet, daß** der Mitnehmerring (6) aus Kunststoff besteht.

8. Stoßfänger nach Anspruch 1, **dadurch gekennzeichnet, daß** die Hülse (2) nach innen gerichtete Zungen (11) aufweist, die in Öffnungen (12) der Stellringe (4) ragen.

9. Stoßfänger nach Anspruch 8, **dadurch gekennzeichnet, daß** die Öffnungen (12) gegenüber den Zungen (11) so groß und der Außendurchmesser des in die Hülse (2) ragenden Stellringes (4) soviel kleiner ist als der lichte Durchmesser der Hülse (2), daß der Stellring (4) gegenüber der Hülse (2) verschwenkbar ist.

## Claims

1. Bumper with adjusting devices (4, 5) for a motor vehicle,
- in which the adjusting devices (4, 5) are each secured to a beam (3) which can be fixed to load-bearing parts of the motor vehicle,
- in which a support (1) is connected to the adjusting devices (4, 5) in such a manner that its position can be changed,
- in which a sleeve (2) arranged transversely relative to the longitudinal axis of the support (1) is secured to each beam (3) in order to fix the support and a respective adjusting ring (4) is arranged in the opposing end regions of each sleeve (2),
- in which the adjusting rings (4) are mounted to tilt through an angular range relative to the sleeve (2) and
- in which the adjusting rings (4) can be clamped to the support (1),
**characterised in that** the adjusting rings (4) are mounted in a torsion-resistant manner relative to the sleeve, that respective threaded bushes (5) are screwed into the two opposing adjusting rings (4) and that the adjusting rings (4) and the threaded bushes (5) together form the adjusting devices (4, 5).

2. Bumper according to claim 1, **characterised in that** the adjusting ring (4) has a circumferential collar (9) which bears via its underside against the associated end face of the sleeve (2), the underside being concave and the end face of the sleeve (2) being adapted thereto in a corresponding manner.

3. Bumper according to claim 1, **characterised in that** the threads of the opposing adjusting rings (4) or of the threaded bushes (5) are opposite threads.

4. Bumper according to claim 3, **characterised in that** a driver ring (6) is fixed in a torsion-resistant manner in each threaded bush (5) and bears frictionally against a screw bolt (7).

5. Bumper according to claim 4, **characterised in that** the screw bolt (7), on the one hand, bears against the outer face of the support (1) and, on the other hand, is screwed into a nut part (8) arranged in a torsion-resistant manner on the opposing outer face of the support (1).

6. Bumper according to claim 5, **characterised in that** the nut part (8) can be displaced to and fro on the corresponding outer surface of the support (1).

7. Bumper according to claim 4, **characterised in that** the driver ring (6) consists of plastic.

8. Bumper according to claim 1, **characterised in that** the sleeve (2) has inwardly directed tongues (11) which project into openings (12) in the adjusting rings (4).

9. Bumper according to claim 8, **characterised in that** the openings (12) are so large compared to the tongues (11) and the outer diameter of the adjusting ring (4) projecting into the sleeve (2) is so much smaller than the clear diameter of the sleeve (2) that the adjusting ring (4) can pivot relative to the sleeve (2).

## Revendications

1. Pare-chocs, avec des dispositifs de réglage (4,5) pour un véhicule automobile,
- où les dispositifs de réglage (4,5) sont chacun fixés à un montant (3) susceptible d'être fixé sur des parties porteuses du véhicule automobile,
- où un support (1) est raccordé, avec une possibilité de variation de positions, aux dispositifs de réglage (4,5), et
- où, pour assurer la fixation du support (1) sur chaque montant (3) est fixée une douille (2), disposée transversalement par rapport à l'axe longitudinal du support et, dans chacune des zones d'extrémité opposée de chaque douille (2), est disposé un anneau de réglage (4),
- où les anneaux de réglage (4) sont maintenus, avec une possibilité de basculement de la valeur d'une plage angulaire, par rapport à la douille (2), et
- où les anneaux de réglage (4) sont susceptibles d'être fixés par serrage sur le support (1 ),
**caractérisé en ce que** les anneaux de réglage (4) sont maintenus de façon assurée en rotation par rapport à la douille, **en ce que**, dans chacun des deux anneaux de réglage (4), opposés l'un à l'autre, est fixée une douille filetée (5), et **en ce que** les anneaux de réglage (4) forment, conjointement avec les douilles filetées (5), les dispositifs de réglage (4,5).

2. Pare-chocs selon la revendication 1, **caractérisé en ce que** l'anneau de réglage (4) présente une collerette (9) de pourtour, placée en appui, par sa face inférieure, sur la face frontale associée de la douille (2), la face inférieure étant d'une incurvation concave, et la face frontale étant adaptée de manière correspondante à la douille (2).

3. Pare-chocs selon la revendication 1, **caractérisé en ce que** le filetage des anneaux de réglage (4), respectivement celui des douilles filetées (5) opposées, sont réalisés avec un pas en sens inverse.

4. Pare-chocs selon la revendication 3, **caractérisé en ce que**, dans chaque douille filetée (5), est fixée, d'une façon assurée en rotation, une bague d'entraînement (6), placée en appui, avec une liaison par friction, sur un boulon fileté (7).

5. Pare-chocs selon la revendication 4, **caractérisé en ce que** le boulon fileté (7), d'une part, appuie sur la face extérieure du support (1) et, d'autre part, est vissé dans une partie formant écrou (8), qui est disposé de façon assurée en rotation, sur la face extérieure opposée du support (1).

6. Pare-chocs selon la revendication 5, **caractérisé en ce que** la partie formant écrou (8) est susceptible d'être coulissée dans un sens et dans l'autre sur la face extérieure correspondante du support (1 ).

7. Pare-chocs selon la revendication 4, **caractérisé en ce que** la bague d'entraînement (6) est réalisée en matière synthétique.

8. Pare-chocs selon la revendication 1, **caractérisé en ce que** la douille (2) présente des languettes (11) orientées intérieurement, pénétrant dans des ouvertures (12) des anneaux de réglage (4).

9. Pare-chocs selon la revendication 8, **caractérisé en ce que** les ouvertures (12) sont, par rapport aux languettes (11), d'une taille telle, et le diamètre extérieur de l'anneau de réglage (4), pénétrant dans la douille (2), sont plus petits que le diamètre intérieur de la douille (2), à un degré tel, que l'anneau de réglage (4) est susceptible de pivoter par rapport à la douille (2).
